# EUROPEAN PATENT APPLICATION

(11) **EP 1 806 711 A1**
(43) Date of publication of application: **11.07.2007**
(21) Application number: 07100240.6
(22) Date of filing: 08.01.2007
(51) Int. Cl.: G09B 19/12, G09B 23/28

(54) **Time-management teaching device**

(30) Priority: 06.01.2006 US 756561 P
(71) Applicant: Tick Task Ltd, Aseret (IL)
(72) Inventor: Shachrur, Ofer, 76804, Mazkeret Batya (IL); Shacgrur, Chagit, 76804, Mazkeret Batya (IL)
(74) Representative: Weydert, Robert

(57) **Abstract**

A time-management teaching device includes a clock-like arrangement which moves an indicator at a rate of one revolution per hour, a number of interchangeable annular elements adapted to be deployed around the clock-like arrangement, and a set of activity markers releasably attachable to any of the annular elements. Each of the activity markers indicates a corresponding activity to be performed by a user. The activity markers attached to each of the interchangeable annular elements indicate, by association with the time progression indicator arrangement, a corresponding progression of activities to be performed during a plurality of periods of up to one hour.

## Description

### FIELD AND BACKGROUND OF THE INVENTION

The present invention relates to a time-management teaching device and, in particular, it concerns a device for developing visual perception of the progression of time during performance of a range of daily activities. The present invention is particularly valuable for children who experience difficulty with time management such as, for example, children who have been diagnosed with ADHD (Attention Deficit Hyperactive Disorder).

The fast moving pace of our modem world makes demands on both children and adults alike, requiring them to adhere to rigid schedules. Our perception of time is a part of our western culture. But children and adults with ADHD have a perception of Time Management that does not meet society's expectations.

This subject is often found in literature dealing with how people with ADHD perceive time. Research has indicated that people diagnosed with ADHD have difficulty assessing the passing of time, because their "internal clock" often runs faster than normal. Some prominent researchers in this field have defined people with ADHD as people who live in a "narrow window of time", and who have a narrower window of conscious perception.

People with ADHD have a different "working memory" which limits their perception of time that has passed, and makes maintaining the sequence of events in the past difficult. People with ADHD are less prepared for the future, and less able to foresee the results of their actions in the near future, or figure out what will happen in the near future. They tend to live "from crisis to crisis", and tend to find many aspects of daily routine difficult and frustrating.

Organization and management of time is one of the "executive functions" that people with ADHD find so difficult to comprehend. People who have difficulty with "executive functions" find organization, prioritization and time management difficult. Difficulty to concentrate, follow orders, control desires and impulses, avoid shortcuts, and complete things started are all characteristic of people with ADHD, and make their lives very difficult.

Children with ADHD have to struggle to maintain focus during boring or repetitive activities. They have difficulty organizing and managing time and find progressing from one activity to the next difficult. Because of "past memory" problem they forget what has to be done, or what they were supposed to do, and how much time has actually passed. Just scheduling daily activities and forming a routine may turn into a continuous struggle requiring preparation and considerable negotiations. These children will require an adult negotiator for the considerable amount of negotiations required to allow them to perform as expected. That adult (negotiator) with have to support the child with verbal reminders to complete a task or start a new one, and the negotiators physical support may be required when the child performs a task, most particularly at the beginning of the task. This is likely to make the child dependent on the adult negotiator, and often daily tension and conflict will develop, creating an unpleasant and tedious atmosphere that adversely affects all involved.

Time as we perceive it can be defined simply as a sequence of events, one preceding the other, such as getting out of bed, leaving the house, or any other activity or event occurring over a period of 24 hours. According to psychologists, our stress level is directly affected by the level of control we have over events and situations in our lives. The lower our level of control, the more stressed we are. Time management is an art, a way to control the sequence of events in our lives. When we control events in our life we reduce stress. Teaching a child time management is a way to help the child to learn how to use his or her time effectively in the future, and is a vital ability in order that the child learns to take responsibility for his or her own life as an adult. The only way the child can take control is by planning his or her time, and planning is bringing conscious thought about future events into the present, so they can be planned and controlled. Children with ADHD do not readily assimilate this learning process, and therefore they need guidance from an outside source in their immediate surroundings. This is also true of management of time and event sequences that should be routine. Therefore tools should he available to the child in his immediate surroundings. These tools will help the child to plan and manage daily events, and increase his or her sense of control.

A number of documents have proposed devices which are intended for time planning and management, and which might be expected to help the user develop an improved perception of the passage of time during performance of daily activities. Examples of such documents include US5646913, DE19533880, US4208870, US6416216 and W09639649. These documents all describe an arrangement of graphic indicator elements which are positioned around the face of a conventional clock to associate particular times with particular activities or events. In most cases, the indicator elements designate times throughout a 12 hour period in conjunction with the hour hand of the clock. However, such arrangements are not of significant help for people suffering from ADHD since the time progression of the hour hand is overly slow compared to the rate of transition between typical daily tasks. US6416216 on the other hand describes a device in which indicator elements deployed on a peripheral ring may correspond to shorter periods, and in one embodiment, to five minute periods in association with the minute hand of a conventional clock mechanism. In this case, however, the display is limited to a single one-hour period of activity scheduling, thereby requiring frequent rearrangement of the symbols if the device is to be used for more than one hour per day.

There is therefore a need for a time-management teaching device which would provide a visual indication of the passage of time through a series of activities at a rate helpful to users suffering from ADHD, while also allowing programming of events for a plurality of periods of a day.

### SUMMARY OF THE INVENTION

The present invention is a time-management teaching device.

According to the teachings of the present invention there is provided, a time-management teaching device comprising: (a) a time progression indicator arrangement configured to move an indicator at a rate of one revolution per hour; (b) a plurality of interchangeable annular elements adapted to be deployed around the time progression indicator arrangement; and (c) a plurality of activity markers each configured for releasable attachment to any one of the interchangeable annular elements, each of the activity markers being indicative of a corresponding activity to be performed by a user, such that the activity markers attached to each of the interchangeable annular elements indicate, by association with the time progression indicator arrangement, a corresponding progression of activities to be performed during a plurality of periods of up to one hour.

According to a further feature of the present invention, the time progression indicator arrangement includes a clock mechanism, and wherein the indicator is a minute hand.

According to a further feature of the present invention, there is also provided a housing for supporting the time progression indicator arrangement, the housing including a storage arrangement configured for storing at least one of the annular elements while not in use.

According to a further feature of the present invention, the storage arrangement is configured for receiving the plurality of the annular elements in superimposed relation deployed around the time progression indicator arrangement.

According to a further feature of the present invention, the storage arrangement is configured for storing the at least one of the annular elements with a plurality of the activity markers attached thereto.

According to a further feature of the present invention, the housing further includes a storage volume for storing a plurality of the activity markers which they are not attached to the annular elements.

According to a further feature of the present invention, each of the annular elements has a plurality of recessed sockets each configured for receiving one of the activity markers.

According to a further feature of the present invention, the recessed sockets are spaced around the annular elements so as to designate, by association with the time progression indicator arrangement, periods of five minutes.

According to a further feature of the present invention, there is also provided an audio reminder unit configured for generating an audio reminder output at at least one user-settable time.

### BRIEF DESCRIPTION OF THE DRAWINGS

The invention is herein described, by way of example only, with reference to the accompanying drawings, wherein:
FIG. 1 is a front view of a time-management teaching device, constructed and operative according to the teachings of the present invention;
FIG. 2 is a rear view of the time-management teaching device of Figure 1;
FIG. 3 is an isometric view of the time-management teaching device of Figure 1;
FIG. 4 is a view similar to Figure 3 during interchanging of annular activity-programming elements;
FIG. 5 is an enlarged isometric view of an annular element from the time-management teaching device of Figure 1 during positioning of activity markers thereon;
FIG. 6 is an enlarged isometric view showing the rear side of the annular element of Figure 5;
FIG. 7 is an isometric view of the time-management teaching device of Figure 1 with all of the annular elements removed to reveal a storage configuration for activity markers; and
FIG. 8 is an isometric view of the time-management teaching device of Figure 1 with the front part of the housing removed to reveal the internal components.

### DESCRIPTION OF THE PREFERRED EMBODIMENTS

The present invention is a time-management teaching device.

The principles and operation of time-management teaching devices according to the present invention may be better understood with reference to the drawings and the accompanying description.

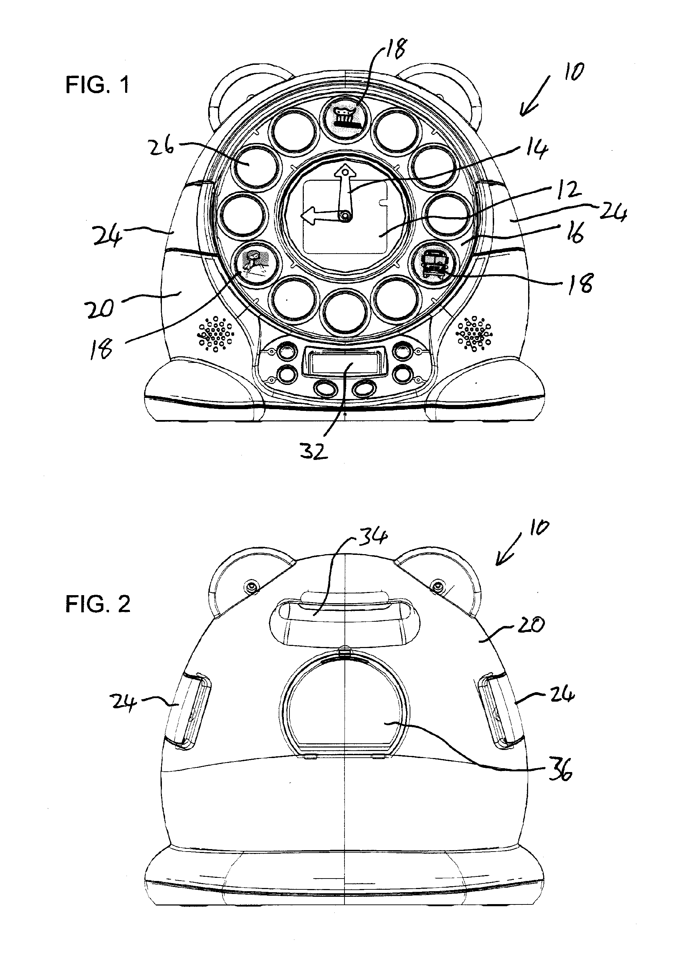

Referring now to the drawings, Figures 1-7 show a time-management teaching device, generally designated **10,** constructed and operative according to the teachings of the present invention. In general terms, time-management teaching device **10** includes a time progression indicator arrangement **12** configured to move an indicator **14** at a rate of one revolution per hour, and a plurality of interchangeable annular elements **16** adapted to be deployed around time progression indicator arrangement **12.** A plurality of activity markers **18,** each configured for releasable attachment to any one of interchangeable annular elements **16,** are indicative of a corresponding activity to be performed by a user. Thus, the subsets of activity markers **18** attached to each of interchangeable annular elements **16** indicate, by association with time progression indicator arrangement **12,** a corresponding progression of activities to be performed during a plurality of periods of up to one hour.

At this stage, it will already be apparent that the present invention provides profound advantages over the prior art devices discussed above. Specifically, by providing programming of activities as a visual sequence on a time scale of one hour per revolution, the user sees clearly the progression of indicator **14** through the allocated time for each activity at a resolution of minutes. Since annular elements **16** are interchangeable, it becomes possible to perform scheduling of activities for a plurality of periods during the day and to keep those schedules (with minor adjustments whenever necessary) without requiring repeated rearrangement of activity markers throughout the day. These and other features of the present invention will become clearer from the detailed description below.

Turning now to the features of the present invention in more detail, time progression indicator arrangement **12** may be any arrangement which provides a visible indicator **14** which travels around a path at a rate of one revolution per hour. The indicator **14** may be either a physical pointer element or may be a graphic indicator on a suitable graphic display. In one particularly preferred implementation, time progression indicator arrangement **12** includes a clock mechanism and indicator **14** is the minute hand. Minute hand **14** is preferably made relatively larger and optionally colored or patterned in such a manner as to make it visually pronounced. Optionally, the hour hand of clock mechanism **12** may be omitted altogether.

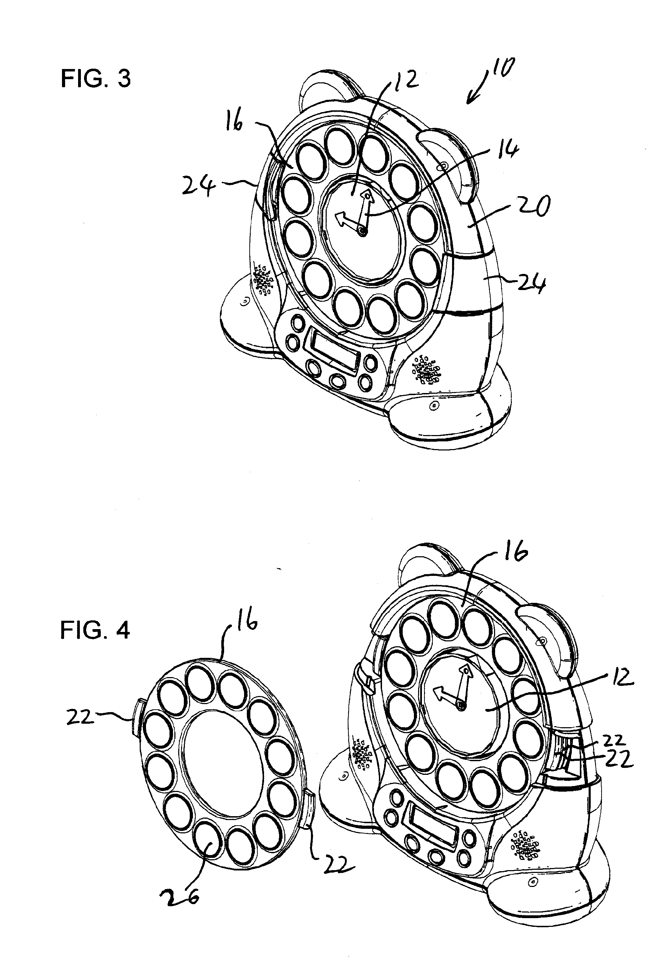

Time-management teaching device **10** preferably has a housing **20** for supporting time progression indicator arrangement **12.** Housing **20** preferably includes a storage arrangement configured for storing annular elements **16** which are not currently in use. In the particularly preferred implementation illustrated here, as best seen in Figure 4, all of annular elements **16** are stored in superimposed relation deployed around time progression indicator arrangement **12.** Each annular element **16** is formed with one or more laterally projecting tab **22** which engages a corresponding slot in housing **20** to maintain angular alignment of the annular element **16.** In the case shown here, two laterally projecting tabs **22** also serve to secure annular elements **16** in position by the use of two hinged clips **24** associated with housing **20.** Most preferably, annular elements **16** are stored complete with a plurality of activity markers **18** attached thereto. Annular elements **16** are then interchanged simply by releasing clips **24,** taking out a number of annular elements **16** and replacing them in a different order so that the one next to be used is at the front. Clips **24** are then closed, leaving the device ready for use.

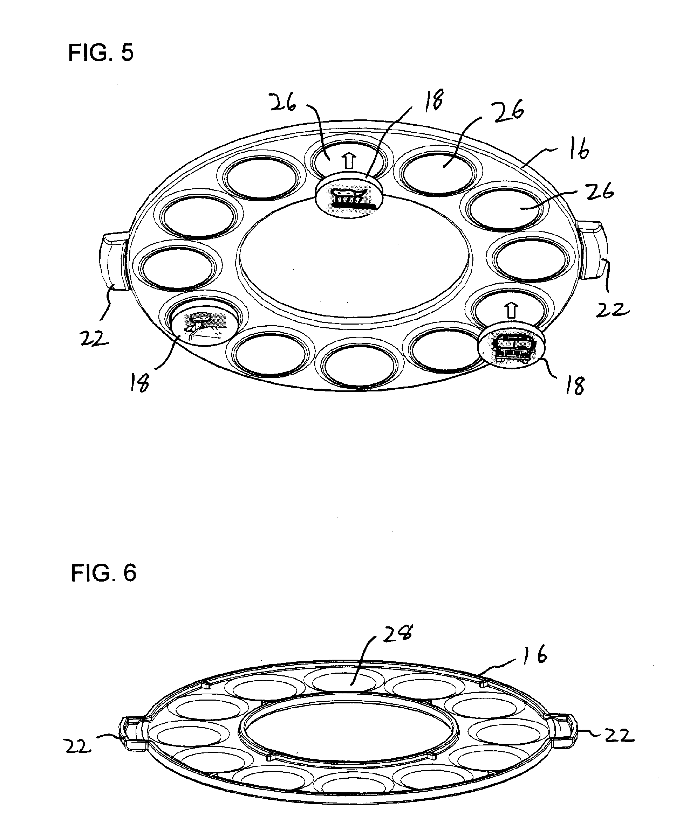

Turning now to Figure 5, this illustrates the procedure for setting up a schedule using one of annular elements **16.** Annular element **16** preferably has a plurality of attachment regions **26** each configured for receiving one of the activity markers **18.** Activity markers **18** attach to attachment regions **26** by any suitable attachment configuration. Examples of suitable attachment configurations include, but are not limited to, magnets, VELCRO^{®}, and frictional or interlocking mechanical engagement. Alternatively, activity markers **18** may be implemented as peel-off stickers or labels for applying directly to surfaces of annular element **16.** It has been found particularly advantageous to position twelve attachment regions **26** at positions corresponding to the hour markers around the clock, such that each activity marker indicates a time period of about 5 minutes.

In the example illustrated in Figure 5, activity markers are being positioned for routine activities to be performed between 7:30 am and 8:30 am. In this case, a marker at the 40-minutes-through-the-hour position shows that this is time to get out of bed. A marker at the zero-minutes-through-the-hour position shows that it is time to brush teeth. A marker being placed at the 20-minutes-past-the-hour position shows that it is time to leave to catch the bus to school. Other markers will typically be added for other activities, for example, eating breakfast, packing a school bag, and putting on a coat. Some activities may last more than a five-minute slot, and will preferably be designated by using two markers.

Figure 6 shows the rear side of annular element **16.** The annular element preferably has a recess **28,** in this case corresponding to a raised region for each attachment region **26,** for accommodating at least part of the thickness of activity markers **18** when the annular elements are stacked in position in the device.

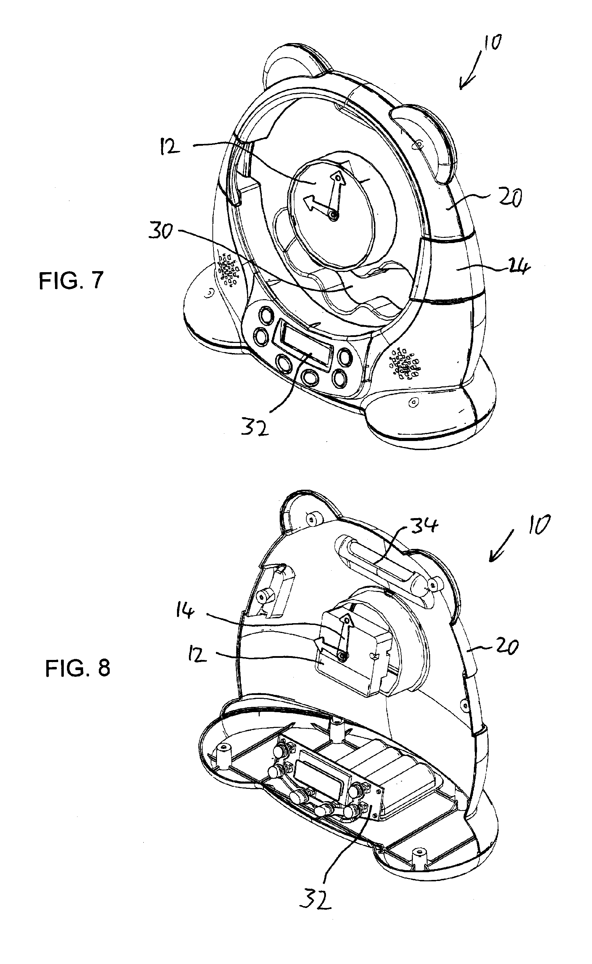

Turning now to Figure 7, housing **20** preferably also includes a storage volume **30** for storing activity markers **18** which are not currently in use. In the preferred implementation illustrated here, storage volume **30** is implemented as a shaped cavity formed as part of the front half of housing **20** behind the normal position of annular elements **16.** The shaped cavity is shown here formed so as to receive three piles of circular activity markers **18** with spaces around them to allow insertion of the fingers in order to grip the activity markers. Storage volume **30** is hidden from view, and the contents retained within, by the presence of the annular elements **16** during use.

Turning now to the remaining features of device **10,** a further preferred optional feature of the device is an audio reminder unit **32** configured for generating an audio reminder output at at least one user-settable time. In the implementation shown here, audio reminder unit is essentially an independent digital alarm clock of which the display and control buttons are integrated into the lower part of housing **20.** Audio reminder unit **32** allows manual setting of one or more alarms, preferably set to sound at times corresponding to particular activities which are either time critical (e.g., leaving to catch a bus) or which are particularly prone to running late or overrunning for the particular user. The front panel of audio reminder unit **32** is visible in Figures 1 and 3, while the inner circuit board and power supply are visible in Figure 8.

Referring again briefly to Figure 2, device **10** is preferably provided with a built-in carry handle, implemented here as a recessed grip **34.** A removable back cover **36** provides access to the controls for adjusting the time indicated by time progression indicator arrangement **12.**

It will be appreciated that the above descriptions are intended only to serve as examples, and that many other embodiments are possible within the scope of the present invention as defined in the appended claims.

## Claims

1. A time-management teaching device comprising:
(a) a time progression indicator arrangement configured to move an indicator at a rate of one revolution per hour;
(b) a plurality of interchangeable annular elements adapted to be deployed around said time progression indicator arrangement; and
(c) a plurality of activity markers each configured for releasable attachment to any one of said interchangeable annular elements, each of said activity markers being indicative of a corresponding activity to be performed by a user,
such that the activity markers attached to each of said interchangeable annular elements indicate, by association with said time progression indicator arrangement, a corresponding progression of activities to be performed during a plurality of periods of up to one hour.

2. The device of claim 1, wherein said time progression indicator arrangement includes a clock mechanism, and wherein said indicator is a minute hand.

3. The device of claim 1, further comprising a housing for supporting said time progression indicator arrangement, said housing including a storage arrangement configured for storing at least one of said annular elements while not in use.

4. The device of claim 3, wherein said storage arrangement is configured for receiving said plurality of said annular elements in superimposed relation deployed around said time progression indicator arrangement.

5. The device of claim 3, wherein said storage arrangement is configured for storing said at least one of said annular elements with a plurality of said activity markers attached thereto.

6. The device of claim 3, wherein said housing further includes a storage volume for storing a plurality of said activity markers which they are not attached to said annular elements.

7. The device of claim 1, wherein each of said annular elements has a plurality of recessed sockets each configured for receiving one of said activity markers.

8. The device of claim 7, wherein said recessed sockets are spaced around said annular elements so as to designate, by association with said time progression indicator arrangement, periods of five minutes.

9. The device of claim 1, further comprising an audio reminder unit configured for generating an audio reminder output at at least one user-settable time.
